# FASCICULE DE BREVET EUROPEEN

(11) **EP 0 556 100 B1**
(45) Date de publication et mention de la délivrance du brevet: **04.06.1997**
(21) Numéro de dépôt: 93400293.2
(22) Date de dépôt: 05.02.1993
(51) Int. Cl.: B60R 7/02, B60R 7/10

(54) **Perfectionnement aux compartiments à bagages de véhicules automobiles**
Verbesserungen am Kofferraum von Kraftfahrzeugen
Improvements to the boot of motorvehicles

(30) Priorité: 11.02.1992 FR 9201492
(43) Date de publication de la demande: 18.08.1993
(73) Titulaire: REGIE NATIONALE DES USINES RENAULT S.A., 92109 Boulogne Billancourt (FR)
(72) Inventeur: Dachicourt, Augustin, F-75007 Paris (FR)
(74) Mandataire: Ernst-Schonberg, Michel

(56) Documents cités:
- DE-A- 3 725 055
- DE-A- 3 923 690
- US-A- 2 953 287
- US-A- 3 318 471
- US-A- 3 473 680

## Description

La présente invention a pour objet un compartiment à bagages de véhicule automobile fermé par un couvercle équipé d'un support d'un bagage extractible et d'un dispositif d'immobilisation dudit bagage.

Les compartiments à bagages des véhicules automobiles sont généralement délimités par des parois latérales, une cloison avant, un couvercle, un plancher et un élément cache-bagage. Cet élément peut être constitué par un couvercle, ou selon un autre exemple de réalisation, par une tablette.

La publication DE-3725055 décrit une mallette à outils amovible fixée sous la plage arrière d'un compartiment à bagages par un système à tiroir.
La publication US-3473680 décrit un compartiment de rangement, par exemple de vêtements, solidaire du couvercle du compartiment à bagages sur lequel il est articulé.

Néanmoins ces compartiments à bagages connus sont peu adaptés au transport d'objets tels que des vêtements. En effet, d'une part la solution décrite dans le document DE-3725055 ne peut convenir que pour des bagages peu encombrants puisque ceux-ci doivent pouvoir se loger sous la plage arrière fixe. D'autre part, le manque d'accessibilité résultant d'une telle disposition, acceptable pour une trousse à outils d'usage peu fréquent est rhédibitoire pour un bagage contenant des vêtements. D'autre part, la solution décrite dans la publication US-3473680 ne concerne pas un bagage amovible mais un compartiment articulé sur le couvercle du compartiment à bagages. Cette solution nécessite donc un bagage supplémentaire pour transporter les vêtements.

L'invention a pour objet un compartiment à bagages et un module de rangement qui y est associé, permettant la prise en charge du module de rangement. Ledit module est notamment approprié au transport des vêtements.

L'invention a encore pour objet un compartiment à bagages dans lequel le bagage, monte sur son support, occupe un volume qui peut être réduit selon le contenu du compartiment à bagages.

Pour satisfaire ces objets, on utilise un bagage en deux parties dont la partie supérieure est constituée par un cadre de rigidification cernant un panneau souple et dont la partie inférieure est formée d'une poche qui comprend un fond et des parois latérales en matière souple. La matière de confection de ladite poche est un tissu assez résistant pour protéger les objets qu'il supporte des détériorations extérieures, et suffisamment souple pour permettre, lorsque le bagage est vide et le compartiment à bagages plein, le pliage des parois latérales.

L'invention concerne également le véhicule utilisant un compartiment à bagages conforme à l'invention dans lequel l'élément porte-bagage est constitué par une tablette arrière cache-bagage ou par un couvercle de compartiment à bagages. Cet élément porte-bagage est muni sur sa face inférieure de moyens d'immobilisation qui coopérent avec des moyens d'immobilisation homologues du bagage.

Selon l'invention, les moyens d'immobilisation sont constitués par un cadre de rigidification du bagage et par une glissière portée par la face inférieure de l'élément porte-bagage.

Le cadre et la glissière coopèrent ainsi ensemble, pour immobiliser le bagage lors du transport de celui-ci dans le compartiment à bagages du véhicule, et pour permettre audit bagage de coulisser dans ladite glissière quand on veut l'extraire du véhicule.

D'autres avantages et caractéristiques de l'invention apparaîtront à la lecture de la description qui suit, d'un exemple de réalisation du compartiment à bagages, en référence au dessin annexé dans lequel :
- la figure 1 est une coupe longitudinale du compartiment à bagages dont le couvercle est représenté dans ses positions fermée et ouverte,
- la figure 2 est un détail selon A de la figure 1,
- la figure 3 est une représentation en perspective du compartiment à bagages en position de réception du bagage et avec son couvercle ouvert.

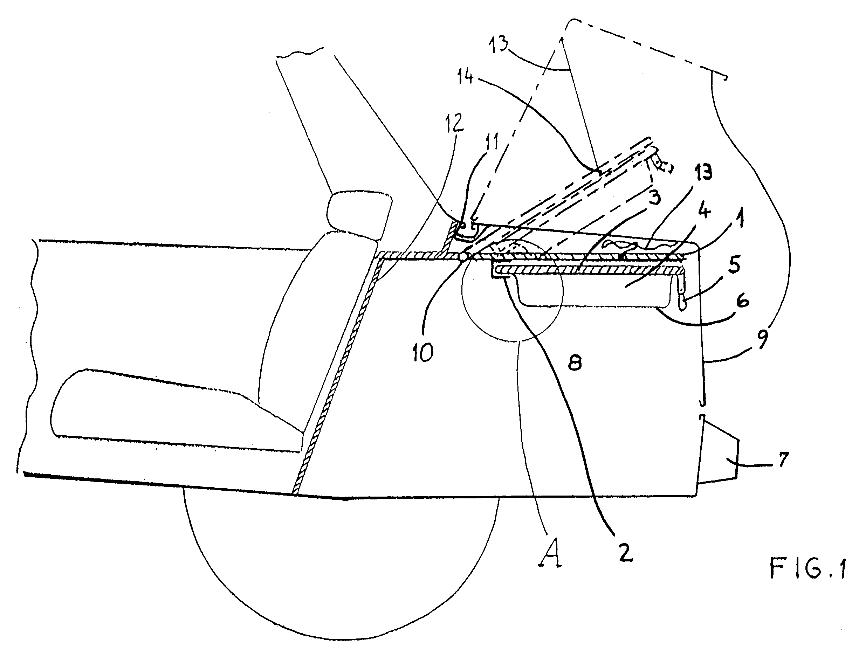

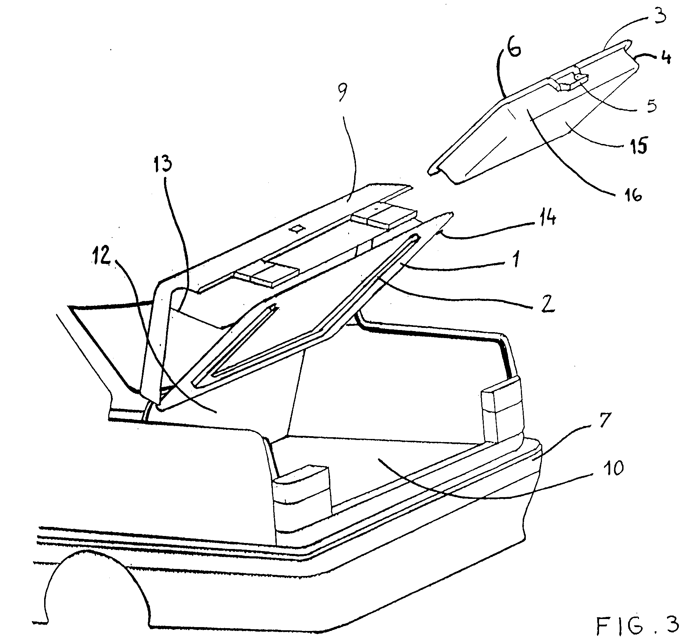

Selon les figures 1 et 3, le compartiment à bagages 8 d'un véhicule automobile est fermé par un couvercle 9 équipé d'un élément porte-bagage 1, d'un bagage extractible 6 et d'un dispositif d'immobilisation dudit bagage 6. Ledit dispositif est porté par la face inférieure de l'élément porte-bagage 1 et par le bagage 6.

Le dispositif d'immobilisation est plus précisément constitué par une glissière 2, fixée à la partie inférieure de l'élément porte-bagage 1, et par un cadre de rigidification 3 délimitant le pourtour de la partie supérieure du bagage 6, lorsque ce dernier est en position de rangement dans le compartiment 8.

Le couvercle 9 supporte l'élément porte-bagage 1 dont la face inférieure porte une glissière 2 de forme appropriée permettant le rangement par coulissement du bagage 6.

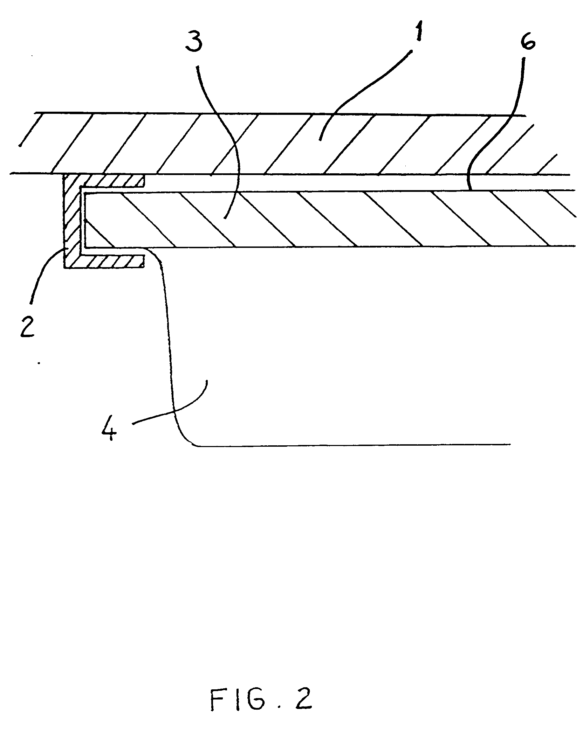

Selon la figure 2, la glissière 2 constitue une partie des moyens d'immobilisation du bagage 6. L'autre partie est constitué par le cadre rigide 3 du bagage 6. Ce cadre 3 est par exemple un profilé mâle qui se positionne dans la glissière 2, afin de coopérer à l'immobilisation du bagage 6 et à son coulissement lors des manutentions visant à son rangement et à son extraction du compartiment à bagage 8.

Le cadre 3 délimite une face souple, et constitue l'armature d'une poche souple 4. Ladite poche 4 est formée par un fond 15 et des parois latérales 16.

La poche 4 et le cadre 3 constituent le bagage extractible 6, dont la manutention est facilitée par une poignée 5.

Selon la figure 3, le couvercle 9 du compartiment à bagages 8 descend au niveau du pare-chocs 7. A cet effet, l'élément porte-bagage 1 et le couvercle 9 possédent des axes de pivotement 10 et 11 transversaux distincts situés au niveau de la partie supérieure de la cloison avant 12 du compartiment à bagages 8. Ledit élément porte-bagage 1 possède latéralement des points d'attache 14 de liens 13, dont la longueur est déterminée pour permettre à l'élément porte-bagage 1 d'occuper une position compatible avec la manutention du bagage.

Le bagage 6 pourrait tout aussi bien être retiré transversalement de l'élément porte-bagage 1.

En outre, un moyen de blocage du bagage 6 en position d'immobilisation peut être constitué par un système additionnel de sangles.

Selon un autre mode de réalisation de l'invention, le dispositif d'immobilisation peut être formé par tout moyen conventionnel, comme des bandes adhésives, des crochets, des agrafes...

Selon une variante de réalisation, le cadre 3, constituant la partie supérieure du bagage 6, intégre un panneau rigide.

Selon une variante de réalisation, la poche 4, constituant la partie inférieure du bagage 6, posséde un fond 15 qui est rigide.

Selon une variante de réalisation, l'élément cache-bagage 1 est constitué par le couvercle 9.

## Revendications

1. Compartiment à bagages (8) de véhicule automobile fermé par un couvercle (9) équipé d'un élément porte-bagage (1), d'un bagage (6) extractible et d'un dispositif d'immobilisation dudit bagage (6), ce dispositif d'immobilisation du bagage (6) étant porté par la face inférieure de l'élément porte-bagage (1) et par le bagage (6).

2. Compartiment à bagages selon la revendication 1, caractérisé par la fait que l'élément porte-bagage (1) est une tablette articulée asservie au mouvement d'ouverture du couvercle (9).

3. Compartiment à bagages selon la revendication 1, caractérisé par le fait que l'élément porte-bagage (1) est constitué par le couvercle (9).

4. Compartiment à bagages selon l'une quelconque des revendications 1 à 3, caractérisé par le fait que le dispositif d'immobilisation est constitué par des moyens de guidage à glissière (2) positionnés sous l'élément porte-bagage (1) et par un cadre (3) de rigidification du bagage (6).

5. Compartiment à bagages selon l'une quelconque des revendications précédentes, caractérisé par le fait que le fond (15) du bagage (6) est une paroi souple raccordée par des parois latérales (16) souples au cadre (3) de rigidification porteur des éléments d'immobilisation dudit bagage (6).

6. Compartiment à bagages selon la revendication 5, caractérisé par le fait que le fond (15) du bagage (6) est une paroi rigide intégrée au cadre (3) de rigidification.

## Claims

1. Luggage compartment (8) of an automotive vehicle closed by a cover (9) fitted with a luggage-carrying element (1), with a removable piece of luggage (6) and with a device for immobilising said piece of luggage (6), said device for immobilising the piece of luggage (6) being carried by the lower face of the baggage-carrying element (1) and by the piece of luggage (6).

2. Luggage compartment according to claim 1, characterised by the fact that the luggage-carrying element (1) is an articulated shelf controlled by the opening movement of the cover (9).

3. Luggage compartment according to claim 1, characterised by the fact that the luggage-carrying element (1) is constituted by the cover (9).

4. Luggage compartment according to any one of claims 1 to 3, characterised by the fact that the immobilising means is constituted by guiding runner means (2) positioned below the luggage-carrying element (1) and by a frame (3) for stiffening the piece of luggage (6).

5. Luggage compartment according to any one of the preceding claims, characterised by the fact that the base (15) of the piece of luggage (6) is a flexible wall joined by flexible lateral walls (16) to the stiffening frame (3) carrying elements for immobilising said piece of luggage (6).

6. Luggage compartment according to claim 5, characterised by the fact that the base (15) of the piece of luggage (6) is a rigid wall integral with the stiffening frame (3).

## Patentansprüche

1. Kofferraum (8) für ein Kraftfahrzeug, welcher durch einen Deckel (9) verschlossen ist, der eine Halterung (1) aufweist, sowie ein herausziehbares Gepäckabteil (6) und eine Feststelleinrichtung für das Gepäckabteil (6), wobei die Feststelleinrichtung für das Gepäckabteil (6) von der unteren Seite der Halterung (1) für das Gepäckabteil (6) und vom Gepäckabteil (6) getragen wird.

2. Kofferraum nach Anspruch 1, dadurch gekennzeichnet, daß die Halterung (1) für das Gepäckabteil eine angelenkte Platte ist, die der Öffnungsbewegung des Deckels (9) folgt.

3. Kofferraum nach Anspruch 1, dadurch gekennzeichnet, daß die Halterung (1) für das Gepäckabteil aus dem Deckel (9) besteht.

4. Kofferraum nach einem der Ansprüche 1 bis 3, dadurch gekennzeichnet, daß die Feststelleinrichtung aus einer Gleitführungsanordnung (2), die unterhalb der Halterung (1) für das Gepäckabteil angeordnet ist und aus einem Versteifungsrahmen (3) des Gepäckabteils (6) besteht.

5. Kofferraum nach einem der vorhergehenden Ansprüche, dadurch gekennzeichnet, daß der Boden (15) des Gepäckabteils (6) eine weiche Wand ist, die über weiche Seitenwände (16) mit dem Versteifungsrahmen (3) verbunden ist, welcher die Feststelleinrichtung des Gepäckabteils (6) trägt.

6. Kofferraum nach Anspruch 6, dadurch gekennzeichnet, daß der Boden (15) des Gepäckabteils (6) eine mit dem Versteifungsrahmen (3) fest verbundene steife Wand ist.
